# EUROPEAN PATENT APPLICATION

(11) **EP 2 746 839 A1**
(43) Date of publication of application: **25.06.2014**
(21) Application number: 13174446.8
(22) Date of filing: 30.06.2013
(51) Int. Cl.: G02F 1/095

(54) **Optical isolator**

(71) Applicant: Schott AG, 55122 Mainz (DE)
(72) Inventor: Yamaguchi, Takashi, Shiga, 525-0027 (JP); Okano, Yoshio, Ibaraki, 300-2648 (JP)
(74) Representative: Blumbach Zinngrebe

(57) **Abstract**

According to the invention, an optical isolator is provided which comprises a substrate, at least one waveguide on the substrate, and a cladding layer made of YIG glass ceramics, characterized in that at least one waveguide is at least partially covered by YIG crystals and/or poly-crystals of said YIG glass ceramics, and that the at least one waveguide has a length of at most 40 µm.

## Description

### Field of the invention

The invention generally relates to an optical isolator and, more particularly to an optical isolator having a YIG glass ceramics.

### Background of the invention

Optical isolators are used to shield active optical components such as laser light sources against light reflected back to such components, because light being reflected back cause noise and wavelength shifts what disturb the performance of the optical system.

For example, the US Statutory Invention Registration H1155 discloses an optical isolator comprising two polarization means, one on the input side, and one on the output side. Between the two polarization means, there is a Faraday rotator. The latter comprises an external magnetic field source and a magneto-optic material. The polarization means on the input side of the isolator is vertically aligned. The Faraday rotator rotates the plane of linearly polarized light, due to the Faraday effect. The polarization plane is rotated by an angle of 45°. The polarization means on the output side is polarized at 45° so that incoming light may leave the isolator. Light travelling backward, like light reflected back, is firstly polarized at 45° by the polarization means on the output side, then the polarization plane of this light is rotated by 45°, by means of the Faraday rotator so that this light is horizontally polarized. Since the polarization means on the input side is vertically polarized, the horizontally polarized light is annihilated.

The Faraday rotator of US H1155 consists of a magneto-optic material such as yttrium iron garnet (YIG).

For rotating the polarization plane about 45°, the Faraday rotator must have a length of 40 to 60 mm. Additionally, an external magnetic field is needed. This is disadvantageous, because such an isolator may not be used in integrated silicon photonics devices.

The isolation loss is > 40dB. The typical insertion loss is 0.1 dB.

Another type of optical isolators, such as the isolator according to US 2005094923, shows a Mach-Zehnder interferometer (MZI) structure. At an input port, the light path branches into two waveguides, a reciprocal and a nonreciprocal one so that incoming light is split in two beams. In a reciprocal waveguide, the power losses are the same between any two ports, regardless of the travelling direction of light. In a nonreciprocal waveguide, the electric properties like the power losses depend on the travelling direction of light.

At the output port of the isolator according to US 2005/094923 A1, the two waveguides unite. A cladding layer is formed on the two waveguides, wherein the cladding layer is made of magneto-optic material such as Cer doped YIG in the form of a single crystal.

An electrode is placed on the cladding layer. This electrode is in parallel to the plane defined by the two waveguides. If an electric current is applied to the electrode, an external magnetic is generated such that the magnetic field direction in the reciprocal waveguide is opposite to the field direction in the nonreciprocal waveguide. Due to the magneto-optic material, a nonreciprocal phase shift is caused, when the external magnetic field is applied.

Since the magnetic field direction, and therewith the magnetization direction of the magneto-optic material, is opposite to each other in the two waveguides, the phase shifts of the light travelling in the two waveguides are of different sign. For light travelling backward, the nonreciprocal waveguide causes a phase shift of π, compared to light travelling backward in the reciprocal waveguide. Due to this phase shift π, the two backward light beams are subject to destructive interference, at the input port.

The phase shift of light travelling forward is 0 so that the two forward light beams interfere constructively, at the output port.

The phase shift difference between forward and backward light equals π what results in a high isolation ration and a low insertion loss.

The travelling length of an optical isolator of the type according to US 2005/094923 A1 is of an order of magnitude of 5 mm. Furthermore, for generating the magnetic field, an external magnetic source is needed. Therefore, optical isolators as described in US 2005094923 are not suitable for being used in integrated silicon photonics devices.

As reported by T. Mizumoto et al. in "Wafer bonding and its application to integrated optical isolators", the 210th Meeting of Electrochemical Society, Third International Symposium on Integrated Optoelectronics, 2006, a modified MZI-type optical isolator with two nonreciprocal waveguides shows a shorter travelling length of 900 to about 6,200 mm. The isolation ratio is 4.9 dB. The travelling length results in an isolator size of 1 to 3 mm still also being too large for the isolator being used in integrated silicon photonics devices. Also in case of optical isolators of modified MZI structure, an external magnetic field is needed.

US 2010/238536 A1 discloses an optical isolator having a ring resonator structure. The isolator comprises an input waveguide, an output waveguide and a silicon resonator. The input and output waveguides are coupled tot the silicon resonator which is applied with a film made of magnetooptical material such as Cer doped YIG (Ce:YIG). According to US 2010238536 and C. A. Ross, "On-Chip optical isolation in monolithically integrated non-reciprocal resonators"; nature photonics letters, 2011, that optical isolators of that non-reciprocal resonator type have an isolation ratio of up to 19.5 dB at a wavelength of about 1.55 µm. The non-reciprocal phase shift is about 290 µm in travelling length. The wave length of the forward and the backward light are different in the non-reciprocal waveguide. The isolation ratio is 19.5 dB. The typical insertion loss is 15 dB, because the absorption of the Ce:YIG is 2.2 mm⁻¹. Also with this type of optical isolator, an external magnetic field is needed. Furthermore, it is difficult to align the magnetic field to the resonator structure.

Therefore, it is an object of the present invention to provide an optical isolator having a travelling length, i.e. a size being small enough for the isolator being part of an integrated silicon photonics device.

It is a further object of the present invention to provide an optical isolator with which no external magnetic field is needed.

It is a still further object of the present to provide an optical isolator having a better isolation ratio, i.e. more than 25 dB, than isolators according to prior art.

It is a still further object of the present invention to provide an optical isolator having less insertion losses, i.e. less than 2 dB, than isolators according to prior art.

### Summary of the invention

These objects are already solved by an optical isolator according to the subject matter of the independent claim 1. Advantageous further embodiments are subject matter of the dependent claims.

According to the independent claim 1, an optical isolator is provided which comprises a substrate, at least one waveguide on the substrate, and a cladding layer comprising or made of YIG glass ceramics. The at least one waveguide is at least partially covered by YIG crystals and/or polycrystals of the YIG glass ceramics. The length of the at least one waveguide is at most 40 µm, preferably at most 30 µm, particularly preferred in a range of 10 to 30 µm.

This length allows the optical isolator to be used in silicon photonics devices.

The YIG crystals of the optical isolator according to the invention are spontaneously magnetized. The spontaneous magnetic field of the YIG crystals provide non-reciprocal phase shift of the optical isolator according to the invention. According to an embodiment of the invention, a defined magnetization is achieved due to the small size of the waveguide and hence the of the cladding layer. In particular, the one or more of the YIG glass-ceramics sections are small enough so that single magnetic domains, preferably by spontaneous magnetization are formed.

Thus, the cladding layer comprises at least one YIG glass ceramics section, the section forming a single magnetic domain. Preferably, the cladding layer comprises at least two separated sections of YIG glass ceramics, each forming a single magnetic domain. The magnetization may be spontaneous or may be aligned by an external field. However, once the direction of magnetization is established, no external field is necessary for operation of the optical isolator.

According to a refinement of the invention, the cladding layer comprises at least one YIG glass ceramics section forming a single magnetic domain, wherein the width of the section in direction along the waveguide 4 is less than 40µm, preferably less than 30 µm. This small dimension of the YIG glass ceramics section suppresses formation of multiple magnetic domains.

To stabilize the direction of magnetization, it is preferred that the lateral distance between two sections of YIG glass ceramics is small. According to a preferred embodiment, at least two laterally separated YIG glass ceramics sections are provided, the lateral distance between said YIG glass ceramics sections being at most 2 µm. However, a minimum distance of at least 0,1 µm is advantageous to ascertain that each section forms a single magnetic domain. The sections can be formed within the cladding layer and/or between a cladding layer and a second YIG glass ceramics layer.

In a first preferred embodiment, the optical isolator further comprises an input port, an output port, wherein the ports define a forward light direction from the input port to the output port, and a backward light direction from the output port to the input port, a first waveguide, a second waveguide, wherein the input port branches into the first waveguide and the second waveguide at a first branching point, and the first waveguide and the second wave guide unite in the output port at a second branching point. The first and the second waveguides each are adapted to transmit light having a wave length λ. The first waveguide is a nonreciprocal waveguide, and the second waveguide is a reciprocal waveguide. The first waveguide is at least partially covered by magnetic domains formed by YIG crystals and/or poly-crystals in the YIG glass ceramics. The first waveguide comprises n alternating pairs of a single mode waveguide part (X1, ..., Xn) and a waveguide part (Y1, ..., Yn) with a height or thickness of the single mode waveguide part being smaller than the height or thickness of the waveguide part, followed by a central waveguide part (Z), followed by n alternating pairs of a single mode waveguide part (X₁, ..., Xₙ) and a waveguide part (Y₁, ..., Yₙ) with a height or thickness being smaller than the height or thickness of the single mode waveguide part (Xₙ₊₂, ..., X₂ₙ₊₁), wherein all single mode waveguide parts (Xᵢ) and all waveguide parts (Yᵢ) each have a length of λ/4, wherein the central waveguide part (Z) has a length of a multiple of λ/2, and wherein n is an integer such that the first waveguide shifts the phase of the backward light about an angle compared with the backward light at the first branching point.

All length specifications mentioned above refer to the wavelength in the light guiding material, i.e. the optical length. Therefore, all geometric lengths have to be reduced by the refractive index of the light guiding material.

Since the incoming is branched at the input and the output port, the optical isolator may be compared with a Mach-Zehnder interferometer (MZI). Therefore, this embodiment may be called an isolator of MZI-type.

The different thicknesses of the parts of the nonreciprocal waveguide causes the waveguide to have the cavity structure of a Fabry-Perot interferometer, since the reflections of the light inside the waveguide are a function of the height or thickness of the waveguide.

Preferably, the angle the phase of the backward light is shifted about is equal to π. When the backward light having a phase shifted about π interferes with the backward light not having a shifted phase, both backward light beams destructively interfere so that no backward light leaves the isolator at its input side.

In a second embodiment of the optical isolator, the optical isolator similar to the first embodiment comprises an input port, an output port, the ports defining a forward light direction from the input port to the output port, and a backward light direction from the output port to the input port, a first waveguide and a second waveguide. The input port branches into the first waveguide and the second waveguide at a first branching point. The first waveguide and the second wave guide unite in the output port at a second branching point. The first and the second waveguides each are adapted to transmit light having a wave length λ. In this embodiment, the first wavequide is covered by 2n+1 magnetic domains formed by YIG crystals and/or polycrystals. In particular these magnetic domains are defined by 2n + 1 (n being an integer) laterally separated sections of the cladding layer. The magnetization of the magnetic domains alternate such that the first waveguide shifts the phase of the backward light about an angle, compared to the backward light at the first branching point. Again, the separated sections of the cladding layer are small enough so that single magnetic domains are formed in the sections. This embodiment of the optical isolator according to the invention also is of MZI-type, since the light branches, or is splitted.

Preferably, the angle of phase shift equals π so that backward light from the nonreciprocal waveguide, interfering with backward light from the reciprocal waveguide destructively interfere. As a result, no backward light leaves the isolator, at the input side.

In a further preferred embodiment of the optical isolator according to the invention, the first waveguide and the second waveguide are nonreciprocal waveguides. The first waveguide is in sections covered by first 2n + 1 magnetic domains formed by YIG crystals and/or poly-crystals, with n being an integer, and the second waveguide is in sections covered by second 2n + 1 magnetic domains formed by YIG crystals and/or poly-crystals such that the magnetization directions of the first YIG magnetic domains alternate, and that the magnetization directions of the second magnetic domains alternate, wherein the magnetic domains 1 to n each have a length of λ/4 and are spaced apart from each other by λ/4, wherein the n + 1^{st} magnetic domain has a length of λ/2 and is spaced apart from each of the nth magnetic domains and the n + 2^{nd} magnetic domain, and wherein the last n magnetic domains each have a length of λ/4 and are spaced apart from each other by λ/4, such that the first waveguide shifts the phase of the backward light about a first angle, compared to the backward light at the first branching point, and the second waveguide shifts the phase of the backward light about a second angle, compared to the backward light at the first branching point, said first angle and second angle having opposite signs.

Preferably, the first angle equals +π/2, and the second angle equals -π/2, so that the total phase shift is π what causes destructive interference. As a result, no backward light leaves the isolator, at the input side.

In a further embodiment, the optical isolator according to the invention is effective for light of a wavelength λ. With this embodiment, the optical isolator comprises one silicon waveguide extending from an input port to an output port, a first and a second non-reciprocal waveguide at least partially covered by YIG crystals and/or poly-crystals, wherein the YIG crystals and/or poly-crystals form magnetic domains of spontaneous magnetization. The first and the second non-reciprocal waveguides are coupled to the waveguide at a coupling point at the input port, wherein the first and the second non-reciprocal waveguides each consist of n alternating pairs of a single mode waveguide part (X1, ..., Xn) and a waveguide part (Y1, ..., Yn) with a height or thickness being smaller than the height or thickness of the single mode waveguide, followed by a central waveguide part (Z), followed by n alternating pairs of a single mode waveguide part (X₁, ..., Xₙ) and a waveguide part (Y₁, ..., Yₙ) with a height or thickness being smaller than the height or thickness of the single mode waveguide part (Xₙ₊₂, ..., X₂ₙ₊₁). All single mode waveguide parts (Xᵢ) and all waveguide parts (Yᵢ) with a height or thickness being smaller than the height or thickness of the single mode waveguide each have a length of λ/4, wherein the central waveguide part (Z) has a length of a multiple of λ/2, and wherein n is an integer, such that the first non-reciprocal waveguide shifts the phase of the backward light about a first angle compared with the backward light at the coupling point at the input port, and wherein the second non-reciprocal waveguide shifts the phase of the backward light about a second angle, compared with the backward light at the coupling point at the input port, said first angle and said second angle having opposite signs.

Preferably, the first angle equals +π/2, and the second angle equals -π/2 so that the backward light from the first waveguide and the backward light from the second waveguide destructively interfere at the input port such that no backward light leaves the isolator at the input port.

In a further preferred embodiment, the optical isolator according to the invention has single mode waveguide parts (X₁, ..., Xₙ) which are covered by magnetic domains formed by YIG crystals or poly-crystals forming magnetic domains of spontaneous magnetization.

In a still further embodiment, the optical isolator according to the invention comprises an input waveguide, an output waveguide and a silicon resonator at least partially covered by magnetic domains formed by YIG crystals and/or poly-crystals such that the resonator causes a non-reciprocal phase shift of 280 to 300 µm in the travelling direction of the light.

In particular, the silicon resonator is at least partially covered by a glass ceramics comprising YIG crystals and/or poly-crystals.

In further preferred embodiments, the optical isolators according to the invention are characterized in that the YIG glass ceramics is doped with Ce with a content of 20% to 27%, preferably of 23% to 25%.

In case of using non-doped YIG glass ceramics and silicon waveguides, typically the angle of Faraday rotation is about 15 deg/mm, and the absorption is about 0.125/mm. More generally, a YIG material can be used for the invention having a low Faraday rotation of less than 50 deg/mm. In case of using YIG glass ceramics doped with Cer, the angle of Faraday rotation is typically about 145 deg/mm, and the absorption is about 2.2/mm at a wavelength of about 1550 nm.

It is preferred that with the last mentioned embodiments of the optical isolators according to the invention, the integer n is greater than 4, preferably equal to 5, in particular equal to 6.

In preferred embodiments, the waveguides of the optical isolators according to the invention are made of silicon.

According to the invention, further, a method for producing the optical isolator is provided, the method comprising the steps of:
providing a substrate, in particular a substrate made of SiO₂,
arranging at least one waveguide on the substrate, covering the substrate with the at least one waveguide with a cladding layer made of YIG glass ceramics,
irradiating the YIG glass ceramics the YIG glass ceramics for forming YIG crystals and/or poly-crystals.

In a preferred embodiment of the method according the invention, the YIG crystals and/or polycrystals spontaneously form magnetic domains, wherein the magnetic fields of said magnetic domains permeate at least one waveguide. Using laser radiation, at least two laterally separated YIG glass ceramics sections with a lateral distance between the YIG glass ceramics sections of at most 2 µm can be easily produced. In particular, the size and distance of the sections or domains can be controlled. According to the invention, an optical circuit device comprising an optical isolator according to the invention is furthermore provided.

In the following, the invention is described in more detail, with reference to the attached drawings, wherein same reference signs refer to same components.

### Brief description of the drawings

In the figures,
- Fig. 1a: is a schematic top view of a MZI-type optical isolator according to prior art,
- Fig. 1b: is a schematic cross sectional view along line X- X' in Fig. 1a,
- Fig. 1c: is a schematic top view of a second MZI-type optical isolator according to prior art,
- Fig. 1d: is a schematic cross sectional view along line X-X' in Fig. 1c,
- Fig. 2a: is a schematic top view of a ring resonator type optical isolator according to prior art,
- Fig. 2b: is a schematic cross sectional view of the ring resonator type optical isolator of Fig. 2a,
- Fig. 3a: is a schematic top view onto a first embodiment of an optical isolator according to the invention,
- Fig. 3b: is a schematic cross sectional view along line X-X' in Fig. 3a,
- Fig. 3c: is a schematic cross sectional view along line Y-Y' in Fig. 3a,
- Fig. 4a: is a schematic top view onto second embodiment of an optical isolator according to the invention,
- Fig. 4b: is a schematic cross sectional view along line X-X' in Fig. 4a,
- Fig. 4c: is a schematic cross sectional view along line Y-Y' in Fig. 3a,
- Fig. 5a: is a schematic top view third embodiment of an optical isolator according to the invention, and
- Fig. 5b: is a schematic cross sectional view along line X-X' in Fig. 5a,
- Fig. 5c: is a schematic cross sectional view along line Y-Y' in Fig. 5a,
- Fig. 6a: is a schematic top view of a fourth embodiment of an optical isolator according to the invention,
- Fig. 6b: is a schematic cross sectional view along line X-X' in Fig. 6a,
- Fig. 6c: is a schematic cross sectional view along line Y-Y' in Fig. 6a,
- Fig. 7a: is a schematic top view of a fifth embodiment of the optical isolator according to the invention,
- Fig. 7b: is a schematic cross sectional view of the optical isolator of fig. 7a
- Fig. 7c: is a schematic cross sectional view of the isolator of fig. 7a along line C-C' in fig. 7a,
- Fig. 8a: is a top view of a sixth embodiment of the optical isolator according to the invention,
- Fig. 8b: is a schematic cross sectional view of the optical isolator of fig. 8a, and
- Fig. 8c: is a schematic cross sectional view of the isolator of fig. 8a along line C-C' in fig. 8a.

### Detailed description of the invention

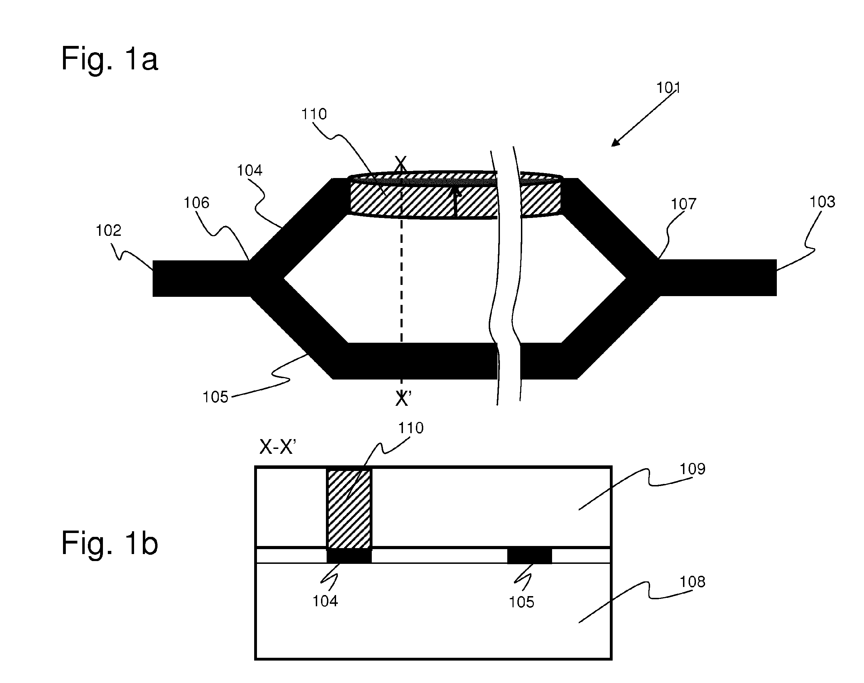

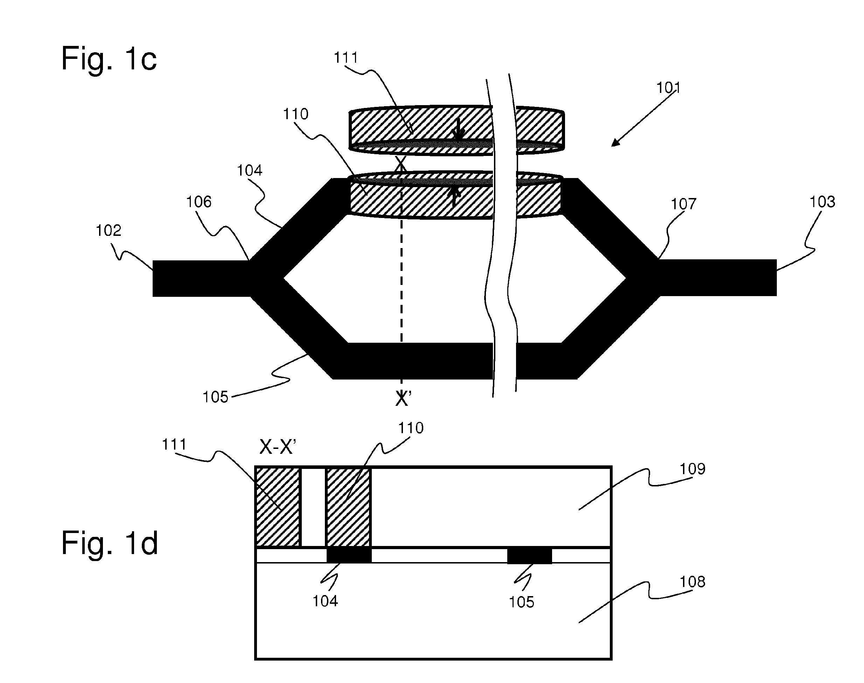

In a schematic top view, Fig. 1 shows an optical isolator 101 according to prior art. Such a type of optical isolator is for example disclosed in US 2005/094923 A1. The isolator 101 has an input port 102 and an output port 103. Light entering the isolator 101 at input port 102 branches at a first branching point 106 in tow waveguides, a first waveguide 104 and a second waveguide 105. At a second branching point 107, the light beams from the first waveguide 104 and the second waveguide 105 unit and leave the isolator 101 at the output port 103.

Since incident light is split into two beams, one travelling through the first waveguide 104 and one travelling through the second waveguide 105, the optical isolator 101 has the basic structure of a Mach-Zehnder-interferometer (MZI).

Both waveguides 104, 105 consist of a silicon core having a height of about 250 nm and a width of about 450 nm.

The first waveguide 104 is covered by a first cladding layer 110 consisting of Cer doped Yttrium Iron Garnet (Ce:YIG).

Fig. 1b is a schematic cross section of the optical isolator 101 along line X-X' in Fig. 1a. The first waveguide 104 and the second waveguide 105 are arranged on a substrate 108, preferably made of SiO₂. on top of the first waveguide 104. there is the cladding layer 110 made of Ce:YIG. As far as not cladded by Ce:YIG, the first waveguide 104 and the second waveguide 105 are cladded by air 109.

The first waveguide 104 is a reciprocal waveguide. The second waveguide 105 is a non-reciprocal waveguide shifting the phase of backward light, i.e. light propagating in the direction from the output port 103 to the input port 102, by an angle n, compared with backward light propagating through the first waveguide 104. If backward light out of the first waveguide 104 interferes with backward light out of the second waveguide 105, the interference will be destructive so that no backward light will leave the isolator 101 at the input port 102.

The phase shift of forward light, i.e. light propagating in the direction from the input port 102 to the output port 103 is zero, when comparing light having propagated through the first waveguide 104 with light having propagated through the second waveguide 105.

The phase shift difference between backward light and forward light therefore is n.

The phase shifts are generated by the Ce:YIG cladding layer 110 being a magneto-optic material. When magnetized, the Ce:YIG cladding layer 110 acts as Faraday rotator which rotates the polarization plane of the light travelling through the first waveguide 104.

The reason for the different phase shifts of forward and backward light is that the complex reflective index of the non-reciprocal material of the first waveguide 104 depends on the magnetization direction of the magneto-optic material of the cladding layer which direction is different with respect to the propagation direction of the light. With the phase shift difference between backward and forward light being n, a high isolation ratio and a low insertion loss can be achieved.

The magnetization of the cladding layer is caused by an external magnetic field, for example generated by an electrical magnet (not shown).

Figs. 1c and 1d also show an optical isolator 101 according to prior art. The optical isolator 101 shown in figs 1c and 1d has the same basic structure as the optical isolator shown in figs. 1a and b. With the optical isolator 101 of figs 1c and 1d, there is an additional layer of Ce doped YIG crystal 111 besides the first waveguide 104. The magnetization direction of this YIG crystal 111 is opposite to the magnetization direction of the classing layer 110.

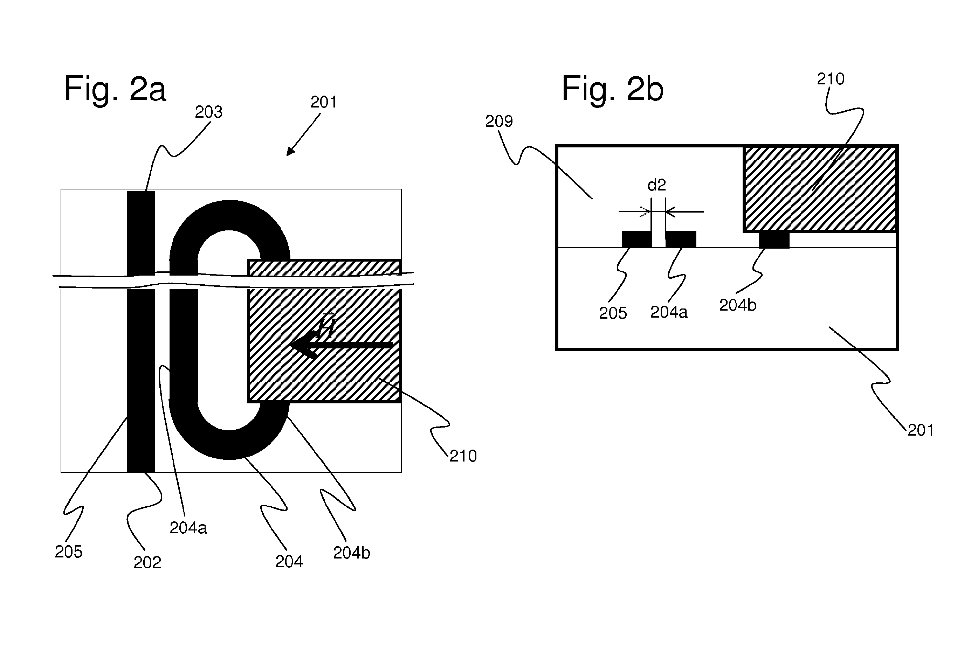

Fig. 2a is a schematic top view onto a further optical isolator 201 according to prior art. Optical isolator 201 has a so called ring resonator structure. It comprises an input port 202 and an output port 203 of a waveguide 205. A ring resonator 204 is coupled to the waveguide 205. Ring resonator 204 comprises a left part 204a and a right part 204b, both parts arranged in parallel to waveguide 205. The right part 204b of the ring resonator 204 is partially covered by a cladding layer 210 consisting of glass ceramics containing YIG which may additionally be doped with Ce. In order to magnetize the cladding layer, an external magnetic field H is applied.

Fig. 2b is a schematic sectional cross view of the optical isolator 201. The waveguide 205 and the ring resonator 204 are arranged on a substrate 208. The waveguide 205 and the right part of the ring resonator are spaced apart by a distance d2. Waveguide 205 and the right part of the ring resonator 204a are cladded by air 209.

Both, waveguide 205 and ring resonator 204 have a width of 450 nm and height of 250 nm.

If cladding layer 210 is magnetized, ring resonator 204 acts as a Faraday rotator, rotating the plane of polarization by an angle of about 145 deg/mm.

In the following, preferred embodiments of the invention are described. For the sake of convenience, YIG single crystals and YIG polycrystals are generally referred to as YIG crystals, in the following. If not otherwise stated, the waveguides described hereinafter, are cladded by air on their top and their sides.

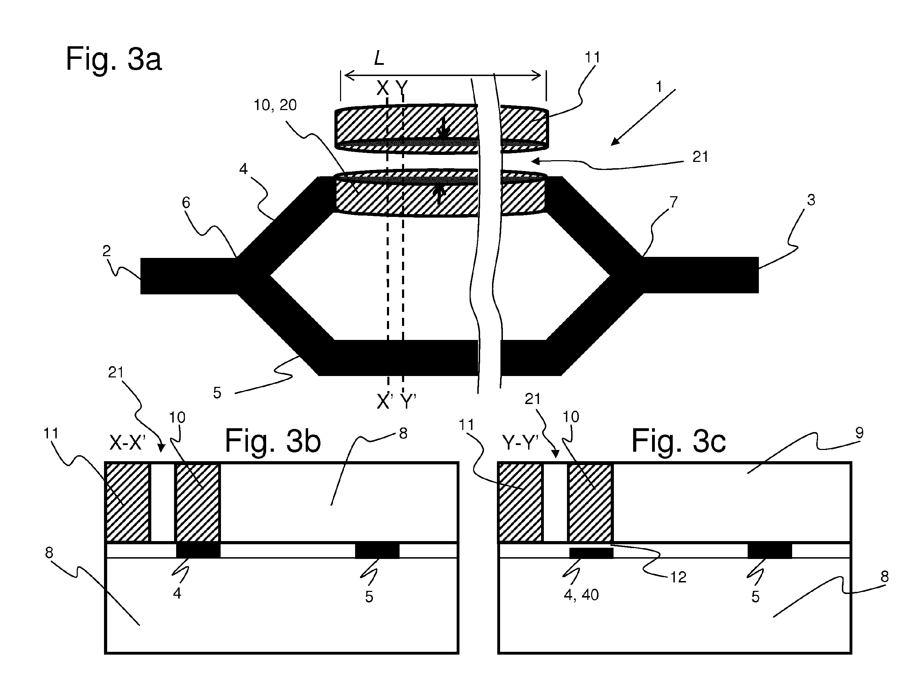

Fig. 3a is a schematic top view of a first embodiment of the optical isolator according to the invention. The isolator 1 of Fig. 3a also shows a basic structure with an input port 1, an output port 3, a first waveguide 4, a second waveguide 5, a first branching point 6 and a second branching point 7. First waveguide 4 is a non-reciprocal waveguide, and second waveguide 5 is a reciprocal waveguide. First waveguide 4 is partially covered by a first YIG layer along a length L. The YIG layer 10 forms a cladding layer 20 of the first waveguide 4. A second YIG layer 11 is arranged besides the first YIG layer 10. The first and second YIG-layers are spatially separated by a small gap.

If the first YIG layer 10 and the second YIG layer 11 are spontaneously magnetized, the directions of magnetization are opposite to each other. A similar magnetization can be induced by an external field. However, no external field is needed after the magnetic domains are aligned. Thus, generally, the optical isolator according to the invention is operable without a further device for generating a magnetic field. In particular, since the length of the YIG layers 10, 11 is even shorter than the length of waveguide 4, i.e., at most 40 µm, preferably at most 30 µm, the YIG layers 10, 11 each have a single magnetic domain. Both YIG layers 10 and 11 together act as a Faraday rotator. The arrangement with the two YIG layers 10, 11 separated by gap 21 stabilizes the magnetization of YIG layer 10 to point in a direction transversally to the longitudinal direction of first waveguide 4.

Generally, without restriction to the embodiment as shown, it is preferred that the lateral dimensions of the YIG layer 10 forming the cladding layer 20 are less than 40 µm, preferably less than 30 µm. In particular the width of the YIG layer 10 in direction along the waveguide 4 is less than 40µm, preferably less than 30 µm. This is a preferred feature for all embodiments of the invention. Thus, the length of the YIG layer 10 does not exceed the length of waveguide 4 being 40 µm or less, preferably 30 µm or less. In other words, the cladding layer 20 comprises at least one separated or isolated YIG glass ceramics section 22 forming a single magnetic domain, wherein the width of the section in direction along the waveguide 4 is less than 40µm. In all figures, the respective direction of magnetization of the YIG layer 10 or sections 22 thereof is indicated by respective arrows.

According to a specific embodiment, second waveguide 5 has a width of 450 nm and height of 250 nm. The width of first waveguide 4 also is 450 nm. First waveguide 4 consists of alternating sections of different heights. A section having a height of 250 nm is followed by a section having a height or thickness of 200 nm. A YIG material with a low Faraday rotation value of less than 50 deg/mm, for example about 15 deg/mm can be used, as a large section of waveguide 4 is covered by the YIG glass ceramics.

Fig. 3b shows the first embodiment of the invention of fig. 3a in a cross sectional view along line X-X' in fig. 3a. Line X-X' cuts first waveguide 4 through a section with a greater height or thickness (250 nm). Generally, without restriction to the specific embodiment as shown, first waveguide 4 and second waveguide 5 are preferably arranged on a substrate 8.

Fig. 3c shows the first embodiment of the invention of fig. 3a in a cross sectional view along line Y-Y' in fig. 3a. Line Y-Y' cuts first waveguide 4 through a section with a smaller height or thickness (200 nm). This section forms a single mode waveguide part 40 Since the height or thickness of first waveguide 4 is only 200 nm, there is a gap between the first waveguide and the first YIG layer 10 which gap is filled by glass layer 19.

In the following, the sections with the greater height or thickness are referred to X, and the sections with the smaller height or thickness are referred to as Y. In the travelling direction of light or forward light direction from input port 2 to output port 3, n pairs of alternating sections X and Y are follows by one section Z having the same height or thickness as sections X. Section Z is followed by further n pairs of alternating sections X and Y. The optical length of sections X and Y is λ/4, and the length of section Z is λ/2, wherein λ is the wavelength of the light in optical isolator 1. The optical length has to be multiplied by the refractive index of the light guiding material in the waveguides 4 and 5 to obtain the geometric length. In total, there are 2n + 1 sections X, Y, and Z in first waveguide 4.

Due to the different height or thicknesss of sections X and Y, first waveguide 4 has the structure of a Fabry-Perot interferometer.

By the non-reciprocal first waveguide 4, the phase of backward light is shifted about an angle n compared with the phase of backward light travelling through second waveguide so that backward from first waveguide 4 and backward light from second waveguide 5 destructively interfere are first branching point 6.

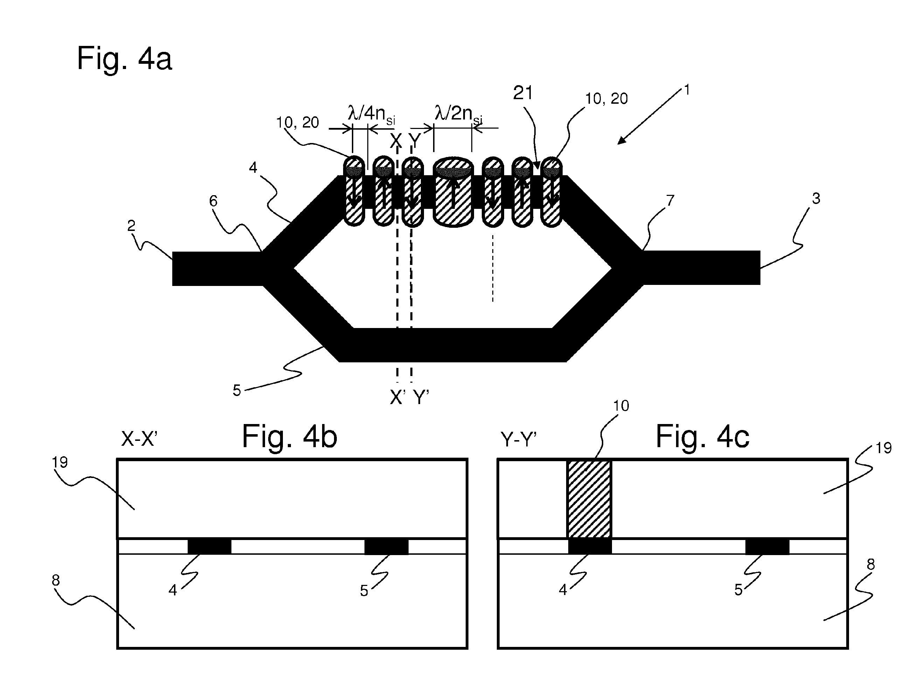

Fig. 4a is a schematic top view of a second embodiment of the optical isolator according to the invention. The isolator 1 of Fig. 4a also shows a basic structure with an input port 1, an output port 3, a first waveguide4, a second waveguide 5, a first branching point 6 and a second branching point 7. First waveguide 4 is a non-reciprocal waveguide, and second waveguide 5 is a reciprocal waveguide. With this embodiment, both waveguides 4 and 5 have the same height or thickness of 250 nm along their entire length. First waveguide 4 is covered in sections by YIG layers 10 with magnetic domains formed by YIG crystals.

In the following, the sections of first waveguide 4 covered by YIG layers are referred to as X, and the sections of first waveguide 4 not covered by YIG layers shall be referred to as Y. In the travelling direction of light from input port 2 to output port 3, n pairs of alternating sections X and Y are followed by one section Z which again is followed by n pairs of alternating section X and Y. The optical length of sections X and Y is λ/4, and the optical length of section Z is λ/2, wherein λ is the wavelength of the light in optical isolator 1. The optical length has to be multiplied by the refractive index of the light guiding material in the waveguides 4 and 5 to obtain the geometrical length. In total, there are 2n + 1 sections X, Y, and Z in first waveguide 4.
By the non-reciprocal first waveguide 4, the phase of backward light is shifted about an angle n compared with the phase of backward light travelling through second waveguide so that backward from first waveguide 4 and backward light from second waveguide 5 destructively interfere are first branching point 6.

Fig. 4b shows the second embodiment of the invention of fig. 4a in a cross sectional view along line X-X' in fig. 4a. Line X-X' cuts first waveguide 4 through a section Y not covered by YIG. Where not covered by YIG, the waveguides 4 and 5 are preferably covered by glass.

Fig. 4c shows the second embodiment of the invention of fig. 4a in a cross sectional view along line Y-Y' in fig. 4a. Line Y-Y' cuts first waveguide 4 through a section X covered by YIG layer 10.

As can be seen in Fig. 4a, the cladding layer 20 formed by first YIG layer 10 consists of sections separates by gaps 21. Each section forms a single magnetic domain. As explained above, the direction of magnetization alternates between adjacent sections. However, all directions of magnetization are transversal to the longitudinal direction of first waveguide 4.

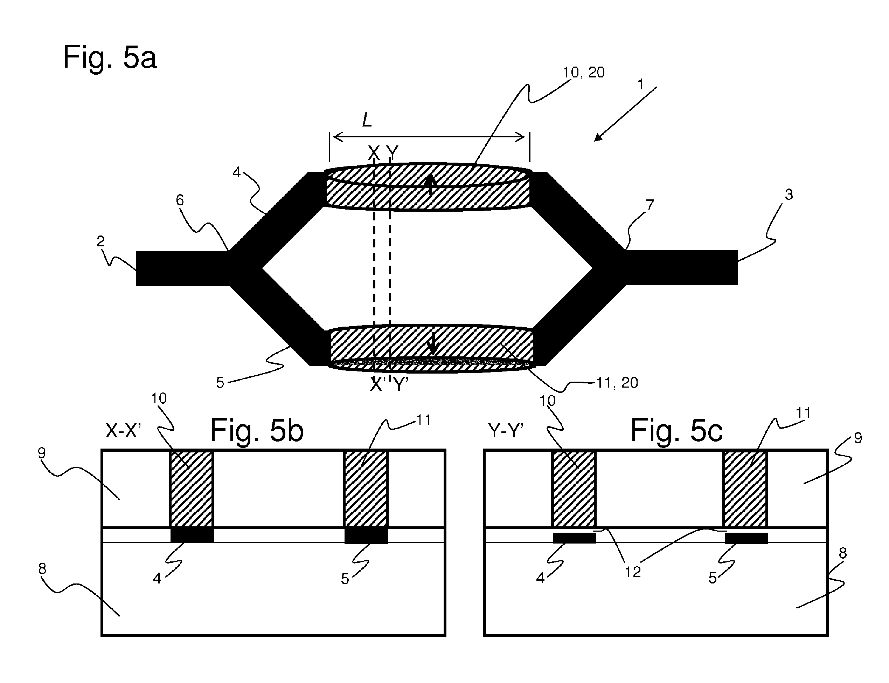

Fig. 5a is a schematic top view of a third embodiment of the optical isolator according to the invention. The isolator 1 of Fig. 5a also shows a basic structure with an input port 1, an output port 3, a first waveguide 4, a second waveguide 5, a first branching point 6 and a second branching point 7. Both waveguides 4 and 5 are non-reciprocal waveguides, and have the same structure of alternating sections X and Y with different thicknesses of 250 nm, and 200 nm, respectively.

First waveguide 4 shifts the phase of backward light about an angle of +n/2, and second waveguide 5 shifts the phase of backward light about an angle of - n/2, resulting in a total phase shift difference of n so that backward from first waveguide 4 and backward light from second waveguide 5 destructively interfere are first branching point 6.

Fig. 5b shows the third embodiment of the invention of fig. 5a in a cross sectional view along line X-X' in fig. 3a. Line X-X' cuts first waveguide 4 and second waveguide 5 through sections with a greater height or thickness (250 nm). First Waveguide 4 and second waveguide 5 are arranged on a substrate 8.

Fig. 5c shows the third embodiment of the invention of fig. 5a in a cross sectional view along line Y-Y' in fig. 5a. Line Y-Y' cuts first waveguide 4 and second waveguide 5 through sections with a smaller height or thickness (200 nm). Since the thicknesses of first waveguide 4 and second waveguide 5 are only 200 nm, there are gaps 12 between the first waveguide 4 and the first YIG layer 10 and between the second waveguide 5 and the second YIG layer 11 which gap is filled by glass layer 19.

Accordingly, this embodiment generally is based on the following features:
The optical isolator comprises an input port 2, an output port 3, the ports 2, 3 defining a forward light direction from the input port 2 to the output port 3, and a backward light direction from the output port 3 to the input port 2, a first waveguide 4 and a second waveguide 5 are provided, wherein the input port 2 branches into the first waveguide 4 and the second waveguide 5 at a first branching point 6, wherein the first waveguide 4 and the second wave guide 5 unite in the output port 3 at a second branching point 7. The first and the second waveguides 4, 5 each are adapted to transmit light having a wave length λ. Both waveguides 4, 5 are nonreciprocal waveguides.

For that purpose, the first waveguide 4 is covered with a first YIG layer 10 and the second waveguide 5 is covered with a second YIG layer 11. Each of the YIG-layers form a cladding layer 20.

Both waveguides 4, 5 comprise n alternating pairs of a single mode waveguide part (X1, ..., Xn) and a waveguide part (Y1, ..., Yn) with a height or thickness of the single mode waveguide part (40) being smaller than the height or thickness of the waveguide part, followed by a central waveguide part Z, followed by n alternating pairs of a single mode waveguide part (X₁, ..., Xₙ) and a waveguide part (Y₁, ..., Yₙ) with a height or thickness being smaller than the height or thickness of the single mode waveguide part (Xₙ₊₂, ..., X₂ₙ₊₁), wherein all single mode waveguide parts (Xᵢ) and all waveguide parts (Yᵢ) each have a length of λ/4, wherein the central waveguide parts (Z) have a length of a multiple of λ/2, and wherein n is an integer such that the first waveguide shifts the phase of the backward light about an angle compared with the backward light at the first branching point 6.

As for the embodiment of fig. 3, YIG material with a low Faraday rotation value of less than 50 deg/mm, for example about 15 deg/mm can be used, as a large section of waveguides 4, 5 is covered by the YIG glass ceramics. According to a specific embodiment, a YIG glass ceramics having a Faraday rotation of 15 deg/mm and an apsorption coefficient of about 0.125/mm is used.

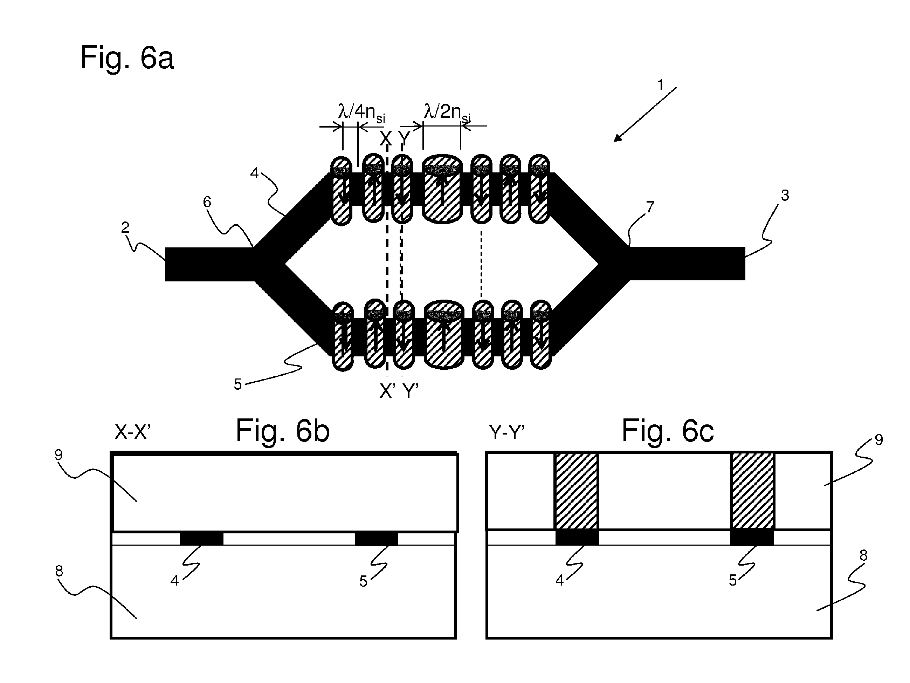

Fig. 6a is a schematic top view of a fourth embodiment of the optical isolator according to the invention. The isolator 1 of Fig. 6a also shows a basic structure with an input port 1, an output port 3, a first waveguide4, a second waveguide 5, a first branching point 6 and a second branching point 7. First waveguide 4 and second waveguide 5 are non-reciprocal waveguides. First waveguide 4 and second waveguide 5 both have the same structure as the second embodiment of isolator 1 (fig. 3 a, b, c) of alternating sections X and Y, sections X covered by YIG and sections Y not covered by YIG.

First waveguide 4 shifts the phase of backward light about an angle of +n/2, and second waveguide 5 shifts the phase of backward light about an angle of - n/2, resulting in a total phase shift difference of n so that backward from first waveguide 4 and backward light from second waveguide 5 destructively interfere are first branching point 6.

Fig. 6b shows the fourth embodiment of the invention of fig. 6a in a cross sectional view along line X-X' in fig. 6a. Line X-X' cuts first waveguide 4 and second waveguide 5 through sections not covered with YIG. First Waveguide 4 and second waveguide 5 are arranged on a substrate 8.

Fig. 6c shows the fourth embodiment of the invention of fig. 6a in a cross sectional view along line Y-Y' in fig. 6a. Line Y-Y' cuts first waveguide 4 and second waveguide 5 through sections covered with YIG. For the embodiments of figs. 4a - 4c and figs. 6a - 6c, a YIG material having a larger Faraday rotation is preferred. In particular, a YIG glass ceramics doped with Ce with a content of 20% to 27%, preferably of 23% to 25% may be employed. This YIG glass ceramics typically has a Faraday rotation of about 145 deg/mm and an absorption of 2.2/mm.

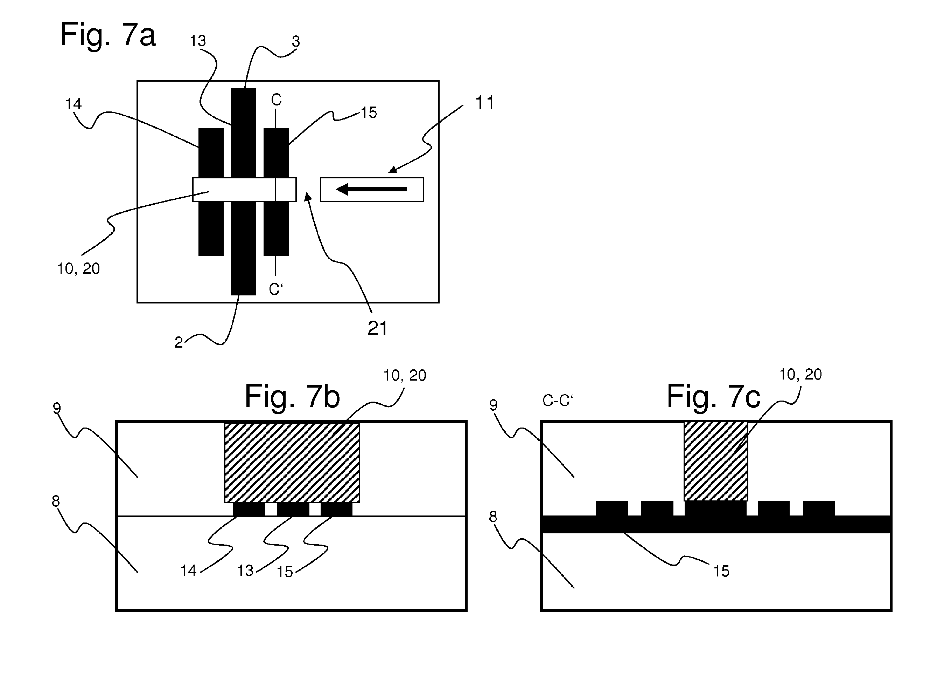

Fig. 7a shows a schematic top view of a further embodiment of the optical isolator according to the invention. Fig. 7b and Fig. 7c are schematic cross sectional views of the optical isolator of fig. 7a, wherein fig. 7b is a cut perpendicular to waveguide 13, and fig. 7c is a cut along line C-C' in fig. 7a.

The isolator comprises a waveguide 13 having an input port 2 and an output port 3. A first coupled waveguide 14 and a second coupled waveguide 15 are coupled to waveguide 13 by means of coupled wave phenomena and are spatially separated from waveguide 13. For that purpose, waveguide 13 and waveguides 14, 15 are arranged in parallel. First coupled waveguide 14, second coupled waveguide 15 and waveguide 13 are partially covered by a common YIG layer 10 forming a cladding layer 20.

As can be seen from fig. 7c, waveguide 13 has the structure of the first waveguide 4 of the optical isolator 1 of fig. 3a, with alternating sections with different thicknesses, for example of 250 nm and 200 nm.

Backward light is split in to first coupled waveguide 14 and second coupled waveguide 15, wherein first coupled waveguide 14 shifts the phase of backward light about an angle of +n/2, and second coupled waveguide shifts the phase of backward light about an angle of - n/2 due to the magnetic field of cladding layer 20 so that backward from first coupled waveguide 14 and backward light from second coupled waveguide 15 destructively interfere. To stabilize the magnetization in a direction transversally to the waveguides, preferably a second YIG layer 11 separated from first YIG layer 10 by a gap 21 is provided.

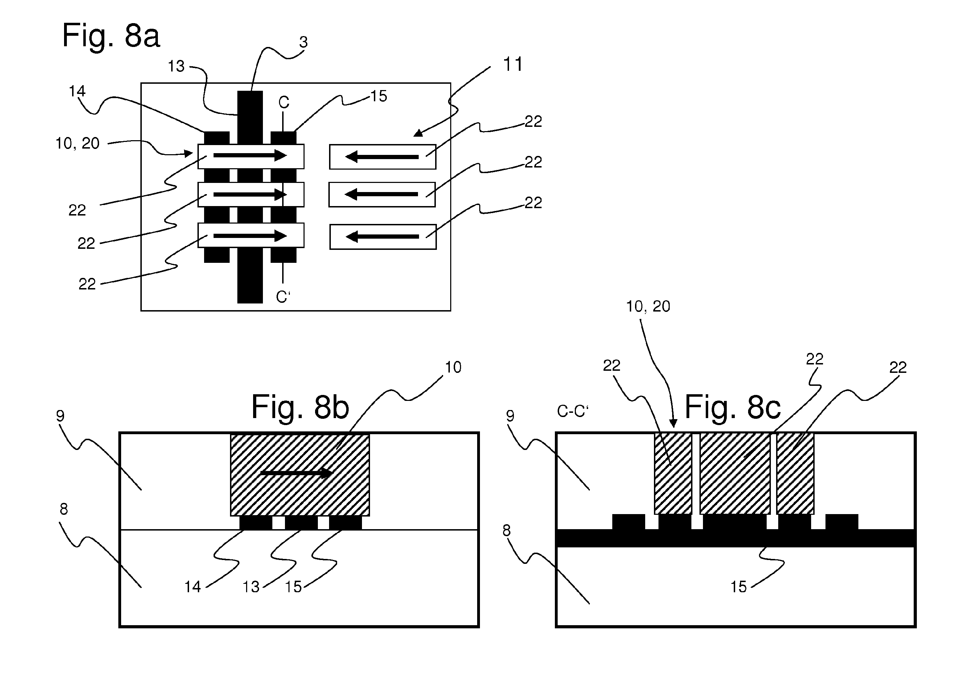

Fig. 8a shows a schematic top view of a still further embodiment of the optical isolator according to the invention. The isolator fig. 8a has the same basic structure like the isolator of Fig. 7a. It comprises a waveguide 13 with an input port 2 and an output port 3, a first coupled waveguide 14 and a second waveguide 15.

Figs 8b and 8c are schematic cross sectional views through the isolator of fig. 8a. Waveguide 13, first coupled waveguide 14 and second waveguide 15 are arranged on a substrate 8, and, unless covered by YIG layer 10, cladded by air 9. Fig. 8b is cut perpendicular to waveguide 13, and fig. 8c is a cut along line C-C' in fig. 7a.

Similarly to the embodiments of fig. 4 and fig. 6, the first YIG layer 10 forming the cladding layer 20 consists of laterally separated sections 22. Each section forms a single magnetic domain. Each of the sections 22 is arranged on top of sections of waveguides 14, 15, having a larger thickness compared to adjacent longitudinal sections of the waveguides.

To stabilize the magnetization in a direction transversally to the waveguides, preferably a second YIG layer 11 separated from first YIG layer 10 by a gap 21 is provided. Like the first YIG layer 10, the second YIG layer 11 is divided into separated sections 22. Each of the sections 22 of second YIG layer 11 faces a corresponding section 22 of the first YIG layer 10.

As the area of the waveguides covered by YIG layer 10 is small, a material with a larger Faraday rotation is preferred for the embodiments of figs. 7 and 8. According to a specific embodiment, Ce doped YIG glass ceramics, preferably doped with a Ce-content of 23% to 25% is used for YIG layers 10, 11. This YIG glass ceramics typically exhibits a Faraday rotation of 145 deg/mm and an absorption coefficient of 2.2 / mm

The YIG crystals forming magnetic domains in the corresponding YIG layers are generated by irradiating the YIG layer by means of a laser. By varying the laser irradiation the size of the YIG domains formed by the crystals may be defined.

### List of reference signs

- 1: optical isolator
- 2: input port
- 3: output port
- 4: first waveguide
- 5: second waveguide
- 6: first branching point
- 7: second branching point
- 8: Substrate
- 9: air
- 10: first YIG layer
- 11: second YIG layer
- 13: waveguide
- 14: first coupled waveguide
- 15: second coupled waveguide
- 19: glass layer
- 20: cladding layer
- 21: gap
- 22: section of YIG glass ceramics
- 40: single mode waveguide part
- 101: optical isolator
- 102: input port
- 103: output port
- 104: first waveguide
- 105: second waveguide
- 106: first branching point
- 107: second branching point
- 108: Substrate
- 109: Air
- 110: first cladding layer
- 111: YIG crystal
- 201: optical isolator
- 202: input port
- 203: output port
- 204: ring resonator
- 204a: left part of ring resonator 204
- 204b: right part of ring resonator 204
- 205: waveguide
- 208: Substrate
- 209: air
- 210: cladding layer
- H: external magnetic field
- L: length of waveguide
- d2: distance between waveguides in ring resonator

## Claims

1. An optical isolator (1) comprising
a substrate (8),
at least one waveguide (4, 13) on the substrate (8), and a cladding layer (20) comprising YIG glass ceramics,
**characterized in that** at least one waveguide (4, 13) is at least partially covered by YIG crystals and/or poly-crystals of said YIG glass ceramics, and the at least one waveguide has a length of at most 40 µm, preferably having a length in a range of 10 to 30 µm.

2. The optical isolator (1) according to claim 1, **characterized in that** said cladding layer comprises at least one YIG glass ceramics section (22), said section (22) forming a single magnetic domain, preferably, wherein said cladding layer comprises at least two separated sections (22) of YIG glass ceramics, each forming a single magnetic domain.

3. The optical isolator (1) according to the preceding claim, wherein the width of the YIG glass ceramics section (22) in direction along the waveguide (4) is less than 40µm.

4. The optical isolator according to one of the preceding claims, **characterized by** at least two laterally separated YIG glass ceramics sections (22), the lateral distance between said YIG glass ceramics sections (22) being at most 2 µm.

5. The optical isolator (1) according to one of the preceding claims, **characterized in that** said YIG crystals are spontaneously magnetized, the spontaneous magnetic field of said YIG crystals providing non-reciprocal phase shift of said optical isolator (1).

6. The optical isolator (1) according to claim 1, **characterized in that** the optical isolator further comprises
an input port (2),
an output port (3), the ports (2, 3) defining a forward light direction from the input port (2) to the output port (3), and a backward light direction from the output port (3) to the input port (2),
a first waveguide (4),
a second waveguide (5),
wherein the input port (2) branches into the first waveguide (4) and the second waveguide (5) at a first branching point (6), wherein the first waveguide (4) and the second wave guide (5) unite in the output port (3) at a second branching point (7), wherein the first (4) and the second waveguides (5) each are adapted to transmit light having a wave length λ,
wherein the first waveguide (4) is a nonreciprocal waveguide, and the second waveguide (5) is a reciprocal waveguide, and that the first waveguide (4) is at least partially covered magnetic domains formed by YIG crystals and/or poly-crystals in the YIG glass ceramics, wherein the first waveguide comprises n alternating pairs of a single mode waveguide part (X1, ..., Xn) and a waveguide part (Y1, ..., Yn) with a height or thickness of the single mode waveguide part (40) being smaller than the height or thickness of the waveguide part , followed by a central waveguide part (Z), followed by n alternating pairs of a single mode waveguide part (X₁, ..., Xₙ) and a waveguide part (Y₁, ..., Yₙ) with a height or thickness being smaller than the height or thickness of the single mode waveguide part (Xₙ₊₂, ..., X₂ₙ₊₁), wherein all single mode waveguide parts (Xᵢ) and all waveguide parts (Yᵢ) each have a length of λ/4, wherein the central waveguide part (Z) has a length of a multiple of λ/2, and wherein n is an integer such that the first waveguide shifts the phase of the backward light about an angle compared with the backward light at the first branching point (6).

7. The optical isolator (1) according to one of claims 1 to 3, **characterized in that** the optical isolator further comprises
an input port (2),
an output port (3), the ports (2, 3) defining a forward light direction from the input port (2) to the output port (3), and a backward light direction from the output port (3) to the input port (2),
a first waveguide (4),
a second waveguide (5),
wherein the input port (2) branches into the first waveguide (4) and the second waveguide (5) at a first branching point (6), wherein the first waveguide (4) and the second wave guide (5) unite in the output port (3) at a second branching point (7), wherein the first (4) and the second waveguides (5) each are adapted to transmit light having a wave length λ,
and said first wavequide being covered by 2n + 1 magnetic domains formed by YIG crystals and/or poly-crystals, in particular of 2n + 1 laterally separated sections of said cladding layer, n being an integer, wherein the magnetization of the magnetic domains alternate such that the first waveguide shifts the phase of the backward light about an angle, compared to the backward light at the first branching point.

8. The optical isolator (1) according to claim 1, **characterized in that** the first waveguide and the second waveguide are nonreciprocal waveguides, that the first waveguide is in sections covered by first 2n + 1 magnetic domains formed by YIG crystals and/or poly-crystals, with n being an integer, and that the second waveguide is in sections covered by second 2n + 1 magnetic domains formed by YIG crystals and/or poly-crystals such that the magnetization directions of said first YIG magnetic domains alternate, and that the magnetization directions of said second magnetic domains alternate, wherein the magnetic domains 1 to n each have a length of λ/4 and are spaced apart from each other by λ/4, wherein the n + 1^{st} magnetic domain has a length of λ/2 and is spaced apart from each of the nth magnetic domains and the n + 2^{nd} magnetic domain by λ/2, and wherein the last n magnetic domains each have a length of λ/4 and are spaced apart from each other by λ/4, such that the first waveguide shifts the phase of the backward light about a first angle, compared to the backward light at the first branching point, and the second waveguide shifts the phase of the backward light about a second angle, compared to the backward light at the first branching point, said first angle and second angle having opposite signs.

9. The optical isolator (1) according to claim 1, effective for light of a wavelength λ, **characterized in that** the optical isolator comprises one silicon waveguide extending from an input port to an output port, a first and a second non-reciprocal waveguide at least partially covered by YIG crystals and/or poly-crystals, said YIG crystals and/or poly-crystals forming magnetic domains of spontaneous magnetization, wherein the first and the second non-reciprocal waveguides are coupled to the waveguide at a coupling point at the input port, wherein the first and the second non-reciprocal waveguides each consist of n alternating pairs of a single mode waveguide part (X1, ..., Xn) and a waveguide part (Y1, ..., Yn) with a height or thickness being smaller than the height or thickness of the single mode waveguide, followed by a central waveguide part (Z), followed by n alternating pairs of a single mode waveguide part (X₁, ..., Xₙ) and a waveguide part (Y₁, ..., Yₙ) with a height or thickness being smaller than the height or thickness of the single mode waveguide part (Xₙ₊₂, ..., X₂ₙ₊₁), wherein all single mode waveguide parts (Xᵢ) and all waveguide parts (Yᵢ) with a height or thickness being smaller than the height or thickness of the single mode waveguide each have a length of λ/4, wherein the central waveguide part (Z) has a length of a multiple of λ/2, and wherein n is an integer, such that the first non-reciprocal waveguide shifts the phase of the backward light about a first angle compared with backward light at the coupling point at the input port, and wherein the second non-reciprocal waveguide shifts the phase of the backward light about a second angle, compared backward light at the coupling point at the input port, said first angle and said second angle having opposite signs.

10. The optical isolator (1) according to claim 1, comprising a waveguide (13) having an input port (2) and an output port (3), a first coupled waveguide (14) and a second coupled waveguide (15) coupled to waveguide (13) by means of coupled wave phenomena, said first coupled waveguide (14) and said second coupled waveguide (15) being spatially separated from waveguide (13) and being arranged in parallel, said first and second coupled waveguides (14, 15) and said waveguide (13) being partially covered by a common YIG layer (10) forming a cladding layer (20).

11. The optical isolator (1) according to claim 1, **characterized in that** the isolator (1) comprises an input waveguide, an output waveguide and a silicon resonator at least partially covered by magnetic domains formed by YIG crystals and/or poly-crystals, such that the resonator causes a non-reciprocal phase shift of 280 to 300 µm in the travelling direction of the light.

12. The optical isolator (1) according to one of the preceding claims, **characterized in that** the YIG glass ceramics is doped with Ce with a content of 20% to 27%, preferably of 23% to 25%.

13. The optical isolator according to one of the preceding claims, **characterized in that** the waveguides are made of silicon.

14. A method for producing an optical isolator according to one of the preceding claims, the method comprising the steps of:
providing a SiO₂ substrate,
arranging at least one waveguide on the substrate,
covering the substrate with the at least one waveguide with a cladding layer made of YIG glass ceramics,
irradiating the YIG glass ceramics the YIG glass ceramics for forming YIG crystals and/or poly-crystals.

15. An optical circuit device comprising the optical isolator (1) according to one of claims 1 to 13.
